(19) Europäisches Patentamt / European Patent Office / Office européen des brevets

(11) **EP 4 121 472 B1**

(12) **EUROPÄISCHE PATENTSCHRIFT**


(45) Veröffentlichungstag und Bekanntmachung des Hinweises auf die Patenterteilung: **30.09.2026 Patentblatt 2026/40**

(21) Anmeldenummer: **21709723.7**

(22) Anmeldetag: **10.03.2021**

(51) Internationale Patentklassifikation (IPC):
***C08G 18/73*** *(2006.01)* ***C08G 18/78*** *(2006.01)*
***C08K 3/36*** *(2006.01)* ***C09J 175/02*** *(2006.01)*
***C09K 3/10*** *(2006.01)* ***C08G 18/48*** *(2006.01)*
***C09J 175/08*** *(2006.01)*

(52) Gemeinsame Patentklassifikation (CPC):
(C-Sets verfügbar)
**C08G 18/73; C04B 40/065; C08G 18/289; C08G 18/3857; C08G 18/4825; C08G 18/7831; C08K 3/36; C09J 175/02;** C04B 2111/00715; C04B 2111/1006; C04B 2111/763 (Forts.)

(86) Internationale Anmeldenummer:
**PCT/EP2021/055982**

(87) Internationale Veröffentlichungsnummer:
**WO 2021/185641 (23.09.2021 Gazette 2021/38)**


(54) **MÖRTELMASSE AUF BASIS VON ISOCYANAT-AMIN-ADDUKTEN, MEHRKOMPONENTEN-HARZSYSTEM SOWIE VERFAHREN UND VERWENDUNG DES MEHRKOMPONENTEN-HARZSYSTEMS ZUR BEFESTIGUNG VON KONSTRUKTIONSELEMENTEN**

MORTAR COMPOSITION BASED ON ISOCYANATE AMINE ADDUCTS, MULTICOMPONENT RESIN SYSTEM, AND METHOD AND USE OF THE MULTI-COMPONENT RESIN SYSTEM FOR THE FIXING OF STRUCTURAL ELEMENTS

COMPOSITION DE MORTIER À BASE D’ADDUITS ISOCYANATE-AMINE, SYSTÈME DE RÉSINE MULTICOMPOSANT AINSI QUE PROCÉDÉ ET UTILISATION DU SYSTÈME DE RÉSINE MULTICOMPOSANT DESTINÉS À FIXER DES ÉLÉMENTS DE CONSTRUCTION


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2020 EP 20164633**

(43) Veröffentlichungstag der Anmeldung:
**25.01.2023 Patentblatt 2023/04**



(73) Patentinhaber: **Hilti Aktiengesellschaft**
**9494 Schaan (LI)**

(72) Erfinder:
- **PLENK, Christian**
  **86916 Kaufering (DE)**
- **DRIEMEYER, Christoph**
  **86165 Augsburg (DE)**

(74) Vertreter: **Hilti Aktiengesellschaft**
**Corporate Intellectual Property**
**Feldkircherstrasse 100**
**Postfach 333**
**9494 Schaan (LI)**



(56) Entgegenhaltungen:
**EP-A1- 3 447 078** **DE-A1- 102006 036 438**
**DE-A1- 102008 018 861** **US-A1- 2016 083 563**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).





**(Forts. nächste Seite)**

(52) Gemeinsame Patentklassifikation (CPC): (Forts.)

C-Sets
**C04B 40/065, C04B 14/06, C04B 14/06, C04B 24/121, C04B 26/16, C04B 2103/0079; C08K 3/36, C08L 75/02**

## Beschreibung

Die vorliegende Erfindung betrifft ein Mehrkomponenten-Harzsystem zur Herstellung einer Mörtelmasse auf Basis von Isocyanat-Amin-Addukten zur chemischen Befestigung von Konstruktionselementen. Die Erfindung umfasst ferner eine Mörtelmasse auf Basis von Isocyanat-Amin-Addukten hergestellt aus dem Mehrkomponenten-Harzsystem. Gegenstand der vorliegenden Erfindung ist auch ein Verfahren sowie die Verwendung einer Mörtelmasse auf Basis der Isocyanat-Amin-Addukte zur chemischen Befestigung von Konstruktionselementen in mineralischen Untergründen.

Üblicherweise werden zur Herstellung von Mörtelmassen zur chemischen Befestigung von Konstruktionselementen, wie beispielsweise Ankerstangen, Bewehrungseisen und Schrauben in Bohrlöchern, Bindemittelsysteme auf Basis von radikalisch härtenden Verbindungen wie Methacrylatharzen oder auf Basis von Epoxidharzen, welche mit Aminhärtern umgesetzt werden, verwendet. Es existieren unzählige kommerziell erhältliche Produkte auf Basis dieser Bindemittelsysteme.

Die bekannten Bindemittelsysteme zeigen jedoch gerade unter kritischen äußeren Bedingungen, wie beispielsweise erhöhten Temperaturen, ungereinigten Bohrlöchern, feuchten oder wassergefüllten Bohrlöchern, diamantgebohrte Bohrlöchern, Bohrlöchern in gerissenem Beton etc. ungenügende Eigenschaften.

Neben der Weiterentwicklung und Verbesserung der bestehenden Bindemittelsysteme, bestehen daher auch Bestrebungen andere als die vorgenannten Bindemittelsysteme in Bezug auf ihre Eignung als Basis für Mörtelmassen zur chemischen Befestigung zu untersuchen. So beschreibt die EP 3 447 078 A1 einen chemischen Dübel, der aus einer Mehrkomponentenmasse hergestellt wird, welcher eine Polyisocyanatkomponente und eine Polyasparaginsäureesterkomponente umfasst. Bei Vermischen der beiden Komponenten entsteht in einer Polyadditionsreaktion Polyharnstoff, welcher das Bindemittel der Mörtelmasse bildet.

Mörtelmassen zur chemischen Befestigung von Konstruktionselementen sind über ihren Lebenszyklus von oftmals mehreren Jahrzehnten wechselnden Witterungseinflüssen, wie beispielsweise großen Temperaturschwankung, ausgesetzt. Selbst in den gemäßigten Klimazonen, wie beispielsweise Europa, beträgt die Temperaturdifferenz zwischen Sommer und Winter zwischen 40 und 50 °C. In Ländern mit sehr hohen Durchschnittstemperaturen, wie beispielsweise den Vereinigten Arabischen Emiraten, sind die Mörtelmassen extremen Temperaturen über 50 °C ausgesetzt. Aus Sicherheitsaspekten ist es unerlässlich, dass sichergestellt ist, dass die eingesetzten Mörtelmassen den Temperaturschwankungen bzw. den hohen Temperaturen ohne nennenswerten Abfall ihrer Versagenslasten widerstehen. Im Allgemeinen wird diese Eigenschaft als Temperaturrobustheit bezeichnet.

Viele Mörtelmassen auf Basis von radikalisch härtenden Verbindungen, wie beispielsweise Methacrylatharze, oder Epoxidharzen weisen eine ungenügende oder nicht ausreichende Temperaturrobustheit auf. Auch zeigt der in der EP 3 447 078 A1 beschriebene chemische Dübel eine unzureichende Temperaturrobustheit, obwohl die Versagenslasten unter Referenzbedingungen (24 h Aushärtung bei Raumtemperatur) zeigen, dass ausgehärtete Mörtelmassen auf Basis von Isocyanaten und Asparaginsäureestern potentiell als Bindemittel für chemische Dübel geeignet sind. DE102008018861-A1 offenbart die Verwendung von Kunstharzen zur Befestigung von Schrauben.

Aufgabe der vorliegenden Erfindung ist daher eine Mörtelmasse auf Basis von Isocyanat-Amin-Addukten zur Verfügung zu stellen, welche für Befestigungszwecke geeignet ist. Die Mörtelmasse soll im Vergleich zu herkömmlichen Mörtelmassen eine verbesserte Temperaturrobustheit bei vergleichbar hoher Auszugsfestigkeit unter Referenzbedingungen zeigen. Insbesondere ist es Aufgabe der vorliegenden Erfindung eine Mörtelmasse auf Basis von Isocyanat-Amin-Addukten zur Verfügung zu stellen, die eine verbesserte Auszugsfestigkeit bei erhöhten Temperaturen, wie beispielsweise bei 80 °C, zeigt.

Die der Erfindung zugrundeliegenden Aufgabe wird durch Bereitstellung eines Mehrkomponenten-Harzsystems gemäß Anspruch 1 gelöst. Bevorzugte Ausführungsformen des erfindungsgemäßen Mehrkomponenten-Harzsystems sind in den Unteransprüchen angegeben, welche wahlweise miteinander kombiniert werden können.

Gegenstand der Erfindung ist ferner eine Mörtelmasse zur chemischen Befestigung von Konstruktionselementen hergestellt aus dem erfindungsgemäßen Mehrkomponenten-Harzsystems gemäß Anspruch 11.

Gegenstand der Erfindung ist auch ein Verfahren zur chemischen Befestigung von Konstruktionselementen in mineralischen Untergründen gemäß Anspruch 12 sowie die Verwendung des erfindungsgemäßen Mehrkomponenten-Harzsystems bzw. der daraus hergestellten Mörtelmasse zur chemischen Befestigung von Konstruktionselementen in mineralischen Untergründen gemäß Anspruch.

Gemäß einem ersten Aspekt der Erfindung ist ein Mehrkomponenten-Harzsystemvorgesehen umfassend

mindestens eine Isocyanatkomponente (A) und mindestens eine Aminkomponente (B),

die Isocyanatkomponente (A) umfasst

- mindestens ein aliphatisches und/oder aromatisches Polyisocyanat mit einer mittleren NCO-Funktionalität von 2 oder größer,

die Aminkomponente (B) umfasst

- mindestens ein gegenüber Isocyanatgruppen reaktives Amin mit einer mittleren NH-Funktionalität von 2 oder größer,

dadurch gekennzeichnet, dass das Mehrkomponenten-Harzsystem frei von Polyasparaginsäureestern ist, und
die Isocyanatkomponente (A) und/oder die Aminkomponente (B) mindestens einen Füllstoff sowie mindestens ein Rheologieadditiv umfasst und
dass der Gesamtfüllgrad einer Mörtelmasse hergestellt durch Vermischen der Isocyanatkomponente (A) und der Aminkomponente (B) in einem Bereich von 30 bis 80 % liegt.

Es hat sich überraschenderweise herausgestellt, dass die Anwesenheit von Polyasparaginsäureester in Isocyanat-Amin-basierten Bindemittelsystemen, welche in Mörtelmassen zur chemische Befestigung verwendet werden, einen negativen Einfluss auf die Temperaturrobustheit der ausgehärteten Mörtelmassen hat. Insbesondere zeigen entsprechende Systemen eine stark verminderte Verbundspannung bei erhöhten Temperaturen, wie beispielsweise 80 °C.

Es ist daher erfindungswesentlich, dass das Mehrkomponenten-Harzsystem und insbesondere die Aminkomponente (A) des Mehrkomponenten-Harzsystems frei von Polyasparaginsäureestern ist. Der Ausdruck *"frei von Polyasparaginsäureestern"* im Sinne der vorliegenden Anmeldung bedeutet, dass der Anteil an Polyasparaginsäureestern im Mehrkomponenten-Harzsystem bevorzugt geringer als 2 Gew.-%, weiter bevorzugt geringer als 0,5 Gew.-% und noch weiter bevorzugt geringer als 0,1 Gew.-% ist jeweils bezogen auf das Gesamtgewicht des Mehrkomponenten-Harzsystems. Die Anwesenheit von Polyasparaginsäureestern in den vorgenannten gewichtsprozentualen Bereichen kann auf potentielle Verunreinigungen zurückgeführt werden. Besonders bevorzugt liegt der Anteil an Polyasparaginsäureestern im Mehrkomponenten-Harzsystem jedoch bei 0,0 Gew.-% bezogen auf das Gesamtgewicht des Mehrkomponenten-Harzsystems.

Zum besseren Verständnis der Erfindung werden die folgenden Erläuterungen der hierin verwendeten Terminologie als sinnvoll erachtet. Im Sinne der Erfindung bedeutet:

- *"Mehrkomponenten-Harzsystem"* ein Reaktionsharzsystem, das mehrere voneinander getrennt gelagerte Komponenten umfasst, so dass eine Härtung erst nach dem Mischen aller Komponenten erfolgt.

- *"Isocyanate"* sind Verbindungen, die eine funktionelle Isocyanatgruppe -N=C=O aufweisen und durch die Struktureinheit R-N=C=O charakterisiert werden.

- *"Polyisocyanate"* sind Verbindungen, die mindestens zwei funktionelle Isocyanatgruppen -N=C=O aufweisen; Diisocyanate, die auch unter die Definition von Polyisocyanat fallen, werden beispielsweise durch die Struktur O=C=N-R-N=C=O charakterisiert und haben damit eine NCO-Funktionalität von 2.

- *"mittlere NCO-Funktionalität",* beschreibt die Anzahl an Isocyanatgruppen in der Verbindung; bei einer Mischung aus Isocyanaten beschreibt die *"gemittelte NCO-Funktionalität"* die gemittelte Anzahl an Isocyanatgruppen in der Mischung und wird nach der Formel: gemittelte NCO-Funktionalität (Mischung) = $\Sigma$ mittlere NCO-Funktionalität (Isocyanat i) / $n_i$, also die Summe der mittleren NCO-Funktionalität der Einzelkomponente geteilt durch die Anzahl der Einzelkomponenten, ermittelt.

- *"Isocyanatkomponente* (A)" oder auch A-Komponente beschreibt eine Komponente des Mehrkomponenten-Harzsystems, welche mindestens ein Polyisocyanat und ggf. mindestens einen Füllstoff und/oder mindestens ein Rheologieadditiv und/oder weitere Additive umfasst.

- *"Amine"* sind Verbindungen mit einer funktionellen NH-Gruppe, die durch Austausch von einem oder zwei Wasserstoffatomen durch Kohlenwasserstoffgruppen aus Ammoniak abgeleitet sind und die allgemeinen Strukturen $RNH_2$ (primäre Amine) und $R_2NH$ (sekundäre Amine) aufweisen (siehe: IUPAC Compendium of Chemical Terminology, 2nd ed. (the "Gold Book"), Compiled by A. D. McNaught and A. Wilkinson, Blackwell Scientific Publications, Oxford (1997)). Von dem Begriff der Amine im Sinne der vorliegenden Erfindungen ist die Verbindungsklasse der Polyasparaginsäureester explizit ausgeschlossen. Diese werden separat unter dem Begriff der Polyasparaginsäureester definiert.

- *"NH-Funktionalität"* beschreibt die Anzahl aktiver Wasserstoffatome, die mit einer Isocyanatgruppe reagieren können, in einer Aminogruppe.

- *"mittlere NH-Funktionalität"* beschreibt die Anzahl aktiver Wasserstoffatome, die mit einer Isocyanatgruppe reagieren können, in einem Amin und ergibt sich aus der Anzahl und NH-Funktionalität der in der Verbindung, dem Amin, enthaltenen Aminogruppen; bei einer Mischung aus Aminen beschreibt die *"gemittelte NH-Funktionalität"* die gemittelte Anzahl an aktiven Wasserstoffatomen in der Mischung und wird nach der Formel: gemittelte NH-Funktionalität (Mischung) = $\Sigma$ mittlere NH-Funktionalität (Amin i) / $n_i$, also die Summe der mittleren NH-Funktionalität der Einzelkomponente geteilt durch die Anzahl der Einzelkomponenten, ermittelt.

- *"Polyasparaginsäureester"* bezeichnet Verbindungen der allgemeinen Formel (I):

$$X\left[-NH-\underset{\substack{|\\ H-C-COOR^2\\ |\\ H}}{\overset{\substack{H\\ |}}{C}}-COOR^1\right]_n \qquad (I),$$

in der

R$^1$ und R$^2$ gleich oder verschieden sein können und einen organischen Rest bedeuten, der gegenüber Isocyanatgruppen inert ist,
X einen n-wertigen organischen Rest bedeutet, der gegenüber Isocyanatgruppen inert ist, und
n eine ganze Zahl von mindestens 2 bedeutet, bevorzugt von 2 bis 6, weiter bevorzugt von 2 bis 4 und besonders bevorzugt 2 bedeutet.

- *"Isocyanat-Amin-Addukte"* sind Polymere, die durch Polyadditionsreaktion von Isocyanaten mit Aminen entstehen. Bevorzugt handelt es sich bei den erfindungsgemäßen Isocyanat-Amin-Addukten um Polyharnstoffe, welche mindestens ein Strukturelement der Form -[-NH-R-NH--NH-R'-NH-] aufweisen.

- *"Aminkomponente (B)"* oder auch B-Komponente eine Komponente des Mehrkomponenten-Harzsystems, welche mindestens ein gegenüber Isocyanatgruppen reaktives Amin und ggf. mindestens einen Füllstoff und/oder mindestens ein Rheologieadditiv und/oder weitere Additive umfasst.

- *"aliphatische Verbindungen"* sind acyclische oder cyclische, gesättigte oder ungesättigte Kohlenstoffverbindungen, ausgenommen aromatische Verbindungen.

- *"alicyclische Verbindungen"* sind aliphatische Verbindungen mit einer carbocyclischen Ringstruktur, ausgenommen Benzolderivate oder andere aromatische Systeme.

- *"araliphatische Verbindungen"* sind aliphatische Verbindungen mit einem aromatischen Grundgerüst, so dass im Falle einer funktionalisierten araliphatischen Verbindung eine vorhandene funktionelle Gruppe an den aliphatischen und nicht den aromatischen Teil der Verbindung angebunden ist.

- *"aromatische Verbindungen"* sind Verbindungen, die der Hückel (4n+2)-Regel folgen.

- *"zweikomponentiges Reaktionsharzsystem"* bedeutet ein Reaktionsharzsystem, das zwei voneinander getrennt gelagerte Komponenten, im vorliegenden Fall eine Isocyanatkomponente (A) und eine Aminkomponente (B), umfasst, so dass eine Härtung erst nach dem Mischen der beiden Komponenten erfolgt.

- *"Mörtelmasse"* bezeichnet die Zusammensetzung, die durch Mischen der Isocyanatkomponente (A) und der Aminkomponente (B) erhalten wird und als solches direkt zur chemischen Befestigung verwendet werden kann.

- *"Füllstoff"* bezeichnet eine organische oder anorganische, insbesondere anorganische Verbindung.

- *"Rheologieadditiv"* bezeichnet Additive, welche in der Lage sind, das Viskositätsverhalten der Isocyanatkomponente (A), der Aminkomponente (B) und des Mehrkomponenten-Harzsystems bei der Lagerung, der Applikation und/oder bei der Aushärtung zu beeinflussen. Das Rheologieadditiv verhindert u.a. eine Sedimentation der Füllstoffe in der

Polyisocyanatkomponente (A) und/oder der Aminkomponente (B). Ferner verbessert es die Mischbarkeit der Komponenten und verhindert eine mögliche Phasenseparation.

- *"Temperaturrobustheit"* bezeichnet die Änderung der Verbundspannung einer ausgehärteten Mörtelmasse bei einer erhöhten Temperatur im Vergleich zur Referenzverbundspannung. Im Rahmen der vorliegenden Erfindung wird die Temperaturrobustheit insbesondere als das Verhältnis der Verbundspannung bei 80 °C zur Referenzverspannung angegeben.

- *"ein", "eine", "einer"* als Artikel vor einer chemischen Verbindungsklasse, z.B. vor dem Wort "Füllstoff", dass eine oder mehrere unter diese chemische Verbindungsklasse fallende Verbindungen, z.B. verschiedene "Füllstoffe", gemeint sein können.

- *"mindestens ein", "mindestens eine", "mindestens einer"* zahlenmäßig "ein oder mehrere"; in einer bevorzugten Ausführungsform ist mit diesem Begriff zahlenmäßig "ein", "eine", "einer" gemeint.

- *"enthalten", "umfassen"* und *"beinhalten",* dass neben den genannten Bestandteilen noch weitere vorhanden sein können; diese Begriffe sind einschließlich gemeint und umfassen daher auch *"bestehen aus"; "bestehen aus"* ist abschließend gemeint und bedeutet, dass keine weiteren Bestandteile vorhanden sein können; in einer bevorzugten Ausführungsform bedeuten die Begriffe *"enthalten", "umfassen"* und *"beinhalten"* den Begriff *"bestehen aus".*

Alle in diesem Text genannten Normen (z.B. DIN-Normen) wurden in der zum Anmeldetag dieser Anmeldung aktuellen Ausgabe verwendet.

*Isocyanatkomponente (A)*

Das erfindungsgemäße Mehrkomponenten-Harzsystem umfasst mindestens eine Isocyanatkomponente (A) und mindestens eine Aminkomponente (B). Die Isocyanatkomponente (A) und die Aminkomponente (B) liegen vor der Anwendung reaktionsinhibierend getrennt voneinander vor.

Die Isocyanatkomponente umfasst mindestens ein Polyisocyanat. Als Polyisocyanat können alle dem Fachmann bekannten aliphatischen und/oder aromatischen Isocyanate mit einer mittleren NCO-Funktionalität von 2 oder größer, einzeln oder in beliebigen Mischungen untereinander, verwendet werden. Die NCO-Funktionalität gibt an, wie viele NCO-Gruppen in dem Polyisocyanat vorhanden sind. Polyisocyanat bedeutet dabei, dass zwei oder mehr NCO-Gruppen in der Verbindung enthalten sind.

Geeignete aromatische Polyisocanate sind solche mit aromatisch gebundenen Isocyanatgruppen, wie Diisocyanatobenzole, Touloldiisocyanate, Diphenyldiisocyanate, Diphenylmethandiisocyanate, Diisocyanatonaphathaline, Triphenylmethantriisocyanate, aber auch solche mit Isocyanatgruppen, die über eine Alkylengruppe, wie etwa eine Methylengruppe an einen Aromaten gebunden sind, wie Bis- und Tris-(isocyanatoalkyl)-benzole, -toluole sowie -xylole.

Bevorzugte Beispiele für aromatische Polyisocyanate sind: 1,3-Phenylendiisocyanat, 1,4-Phenylendiisocyanat, 2,4-Toluylendiisocyanat, 2,5-Toluylendiisocyanat 2,6-Toluylendiisocyanat, 1,3-Xylylendiisocyanat, 1,4-Xylylendiisocyanat Tetramethyl-1,3-xylylendiisocyanat, Tetramethyl-1,4-xylylendiisocyanat, 1,3-Bis(isocyanatomethyl)benzol, 1,4-Bis(isocyanatomethyl)benzol, Ethylphenyldiisocyanat, 2-Dodecyl-1,3-phenylendiisocyanat, 2,4,6-Triisopropyl-m-phenylendiisocyanat, 2,4,6-Trimethyl-1,3-phenylendiisocyanat, Xylylendiisocyanat, 1,5-Naphthylendiisocyanat, 3,3'-Dimethyl-4,4'-biphenyldiisocyanat, 3,3'-Dimethoxy-4,4'-biphenyldiisocyanat, 3,3'-Dimethyl-4,4'-biphenyldiisocyanat, Diphenylenmethan-2,4'-diisocyanat, Diphenylenmethan-2,2'-diisocyanat, Diphenylenmethan-4,4'-diisocyanat, Triphenylmethan-4,4',4"-triisocyanat, 5-(p-Isocyanatobenzyl)-2-methyl-m-phenylendiisocyanat, 4,4-Diisocyanato-3,3,5,5-tetraethyldiphenylmethan, 5,5'-Ureylendi-o-tolyldiisocyanat, 4-[(5-Isocyanato-2-methylphenyl)methyl]-m-phenylendiisocyanat, 4-[(3-isocyanato-4-methylphenyl)methyl]-m-phenylendiisocyanat, 2,2'-Methylen-bis[6-(o-isocyanatobenzyl)phenyl]diisocyanat.

Bevorzugt werden aliphatische Isocyanate verwendet, die ein Kohlenstoffgrundgerüst (ohne die enthaltenen NCO-Gruppen) von 3 bis 30 Kohlenstoffatomen, bevorzugt von 4 bis 20 Kohlenstoffatomen aufweisen. Beispiele für aliphatische Polyisocyanate sind Bis-(isocyanatoalkyl)ether oder Alkandiisocyanate, wie Methandiisocyanat, Propandiisocyanate, Butandiisocyanate, Pentandiisocyanate, Hexandiisocyanate (z.B. Hexamethylendiisocyanat, HDI), Heptandiisocyanate (z.B. 2,2-Dimethylpentan-1,5-diisocyanat, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat, 5-Methylnonandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane ($H_6XDI$), 3-Isocyanatomethyl-3,5,5-trimethylcyclohexylisocyanat (Isophorondiisocyanat, IPDI), Bis-(4-isocyanatocyclohexyl)methan ($H_{12}MDI$), Bis-(isocyanatomethyl)norbornan (NBDI) oder 3(4)-Iso-

cyanatomethyl-1-methyl-cyclohexylisocyanat (IMCI), Octagydro-4,7-methano-1H-indendiemthyldiisocyanat, Norbornendiisocyanat, 5-Isocyanato-1-(isocyanatomethyl)-1,3,3-trimethylcyclohexan, Ureylenbis(p-phenylenmethylene-p-phenylen)diiscoyanat.

Besonders bevorzugte Isocyanate sind Hexamethylendiisocyanat (HDI), Trimethyl-HDI (TMDI), Pentandiisocyanat (PDI) 2-Methylpentan-1,5-diisocyanat (MPDI), Isophorondiisocyanat (IPDI), 1,3- sowie 1,4-Bis(isocyanatomethyl) cyclohexan ($H_6XDI$), Bis(isocyanatomethyl)norbornan (NBDI), 3(4)-Isocyanatomethyl-1-methyl-cyclohexylisocyanat (IMCI) und/oder 4,4'-Bis(iso- cyanatocyclohexyl)methan ($H_{12}MDI$) oder Gemische dieser Isocyanate.

Noch weiter bevorzugt liegen die Polyisocyanate als Präpolymere, Biurete, Isocyanurate, Iminooxadiazindione, Uretdione und/oder Allophanate vor, die durch Oligomerisierung von difunktionellen Isocyanaten oder durch Umsetzung der Isocyanatverbindungen mit Polyolen oder Polyaminen, einzeln oder als Gemisch, hergestellt werden können, und die eine mittlere NCO-Funktionalität von 2 oder größer aufweisen.

Beispiele für geeignete, kommerziell erhältliche Isocyanate sind Desmodur® N 3900, Desmodur® N 100, Desmodur® Ultra N 3200, Desmodur® Ultra N 3300, Desmodur® Ultra N 3600, Desmodur® N 3800, Desmodur®XP 2675, Desmodur® 2714, Desmodur® 2731, Desmodur® N 3400, Desmodur® XP 2679, Desmodur® XP 2731, Desmodur® XP 2489, Desmodur® E 3370, Desmodur® XP 2599, Desmodur® XP 2617, Desmodur® XP 2406, Desmodur® XP 2551, Desmodur® XP 2838, Desmodur® XP 2840, Desmodur® VL, Desmodur® VL 50, Desmodur® VL 51, Desmodur® ultra N 3300, Desmodur® eco N 7300, Desmodur® E23, Desmodur® E XP 2727, Desmodur® E 30600, Desmodur® E 2863 XPDesmodur® H, Desmodur® VKS 20 F, Desmodur® 44V20I, Desmodur® 44P01, Desmodur® 44V70 L, Desmodur® N3400, Desmodur® N3500 (jeweils erhältlich von Covestro AG), Tolonate™ HDB, Tolonate™ HDB-LV, Tolonate™ HDT, Tolonate™ HDT-LV, Tolonate™ HDT-LV2 (erhältlich von Vencorex), Basonat® HB 100, Basonat® HI 100, Basonat® HI 2000 NG (erhältlich von BASF), Takenate® 500, Takenate® 600, Takenate® D-132N(NS), Stabio® D-376N (jeweils erhältlich von Mitsui), Duranate® 24A-100, Duranate® TPA-100, Duranate® TPH-100 (jeweils erhältlich von Asahi Kasai), Coronate® HXR, Coronate® HXLV, Coronate® HX, Coronate® HK, (jeweils erhältlich von Tosoh).

Eines oder mehrere Polyisocyanate sind verzugsweise in einem Anteil von 20 bis 100 Gew.-%, bevorzugt in einem Anteil von 30 bis 90 Gew.-% und noch bevorzugter in einem Anteil von 35 bis 65 Gew.-% bezogen auf das Gesamtgewicht der Isocyanatkomponente in der Isocyanatkomponente enthalten.

*Aminkomponente (B)*

Die Aminkomponente (B), welche im Mehrkomponenten-Harzsystem reaktionsinhibierend getrennt von der Isocyanatkomponente (A) vorliegt, umfasst mindestens ein gegenüber Isocyanatgruppen reaktives Amin mit wenigstens zwei Aminogruppen als funktionelle Gruppen. Erfindungsgemäß weist das Amin eine mittlere NH-Funktionalität von 2 oder größer auf. Die mittlere NH-Funktionalität gibt die Anzahl der an ein Stickstoffatom gebundene Wasserstoffatome in dem Amin an. Demnach weist bspw. ein primäres Monoamin eine mittlere NH-Funktionalität von 2, ein primäres Diamin eine mittlere NH-Funktionalität von 4, ein Amin mit 3 sekundären Aminogruppen eine mittlere NH-Funktionalität von 3 auf und ein Diamin mit einer primären und einer sekundären Aminogruppe eine mittlere NH-Funktionalität von 3 auf. Die mittlere NH-Funktionalität kann sich auch nach den Angaben der Anbieter von Aminen richtet, wobei die tatsächlich angegebene NH-Funktionalität von der theoretischen mittleren NH-Funktionalität, wie sie hierin verstanden wird, abweichen kann. Durch den Ausdruck "mittlere" wird ausgedrückt, dass es sich um die NH-Funktionalität der Verbindung und nicht die NH-Funktionalität der in den Verbindung enthaltenen Aminogruppe(n) handelt. Die Aminogruppen können dabei primäre oder sekundäre Aminogruppen sein. Das Amin kann entweder nur primäre oder nur sekundäre Aminogruppen, oder sowohl primäre als auch sekundäre Aminogruppen enthalten.

Gemäß einer bevorzugten Ausführungsform ist das gegenüber Isocyanat-Gruppen reaktive Amin aus der aus aliphatischen, alicyclischen, araliphatischen und aromatischen Aminen bestehenden Gruppe ausgewählt, besonders bevorzugt aus der aus alicyclischen und aromatischen Aminen bestehenden Gruppe ausgewählt.

Gegenüber Isocyanatgruppen reaktive Amine sind dem Fachmann grundsätzlich bekannt. Beispiele für gegenüber Isocyanatgruppen reaktive geeignete Amin sind im Folgenden angegeben, ohne jedoch den Umfang der Erfindung einzuschränken. Diese können sowohl einzeln als auch in beliebigen Mischungen untereinander verwendet werden. Beispiele sind: 1,2-Diaminoethan(ethylendiamin), 1,2-Propandiamin, 1,3-Propandiamin, 1,4-Diaminobutan, 2,2-Dimethyl-1, 3-propandiamin(neopentandiamin), Diethylaminopropylamin (DEAPA), 2-Methyl-1,5-diaminopentan, 1,3-Diaminopentan, 2,2,4- oder 2,4,4-Trimethyl-1, 6-diaminohexan und Gemische davon (TMD), 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-amino-3-methylcyclohexyl)methan, Diethylentriamin (DETA), 4-Azaheptan-1, 7-diamin, 1,11-Diamino-3, 6,9-trioxundecan, 1,8-Diamino-3, 6-dioxaoctan, 1,5-Diamino-methyl-3-azapentan, 1,10-Diamino-4,7-dioxadecan, Bis(3-aminopropyl)amin, 1,13-Diamino-4,7, 10-trioxatridecan, 4-Aminomethyl-1, 8-diaminooctan, 2-Butyl-2-ethyl-1, 5-diaminopentan, N, N-Bis-(3-aminopropyl)methylamin, Triethylentetramin (TETA), Tetraethylenpentamin (TEPA), Pentaethylenhexamin (PEHA), 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipro-

pylentriamin, Dimethylaminopropyl-aminopropylamin (DMAPAPA), 2,4-Diamino-3,5-dimethylthiotoluol (Dimethylthio-toluoldiamin, DMTDA) 3-Aminomethyl-3,5,5-trimethylcyclohexylamin (Isophorondiamin (IPDA)), Diaminodicyclohexylmethan (PACM), Diethylmethylbenzoldiamin (DETDA), 3,3'-Diaminodiphenylsulfon (33Dapson), 3,3'-Diaminodiphenylsulfon (Dapson), gemischte polycyclische Amine (MPCA) (z.B. Ancamine 2168), Dimethyldiaminodicyclohexylmethan (Laromin C260), 2,2-Bis(4-aminocyclohexyl)propan, (3(4),8(9)Bis(aminomethyldicyclo[5.2.1.0$^{2,6}$]decan (Isomerengemisch, tricyclischer primärer Amine; TCD-Diamin), Methylcyclohexyl-diamin (MCDA), N,N'-Diaminopropyl-2-methyl-cyclohexan-1,3-diamin, N,N'-Diaminopropyl-4-methyl-cyclohexan-1,3-diamin, N-(3-Aminopropyl)cyclohexylamin, und 2-(2,2,6,6-tetramethylpiperidin-4-yl)propan-1,3-diamin.

Besonders bevorzugte Amine sind Diethylmethylbenzoldiamin (DETDA), 2,4-Diamino-3,5-dimethylthiotoluol (Dimethylthio-toluoldiamin, DMTDA), 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure 300), 4,4'-Methylenbis(2,6-diethylanilin), 4,4'-Methylenbis(N-sec-butylcyclohexanamin) (Clearlink 1000), 3,3'-Diaminodiphenylsulfon (33Dapson), 4,4'-Diaminodiphenylsulfon (44Dapson), N,N'-Di-sec-butyl-p-phenylenediamin und 2,4,6-Trimethyl-m-phenylenediamin, 4,4'-methylenebis(N-(1-methylpropyl)-3,3'-dimethylcyclohexanamine (Clearlink 3000), das Reaktionsprodukt von 2-Propenenitril mit 3-Amino-1,5,5-trimethylcyclohexanmethanamin (Jefflink 745) und 3-((3-(((2-Cyanoethyl)amino)methyl)-3,5,5-trimethylcyclohexyl)amino)propiononitrile (Jefflink 136 oder Baxxodur PC136).

Ganz besonders bevorzugte Amine sind 4,4'-Methylen-bis[N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure 300), 4,4'-Methylenbis(2,6-diethylanilin), 4,4'-Methylenebis(N-sec-butylcyclohexanamin) (Clearlink 1000), 3,3'-Diaminodiphenylsulfon (Dapson), N,N'-Di-sec-butyl-p-phenylenediamin und 2,4,6-Trimethyl-m-phenylenediamin.

Eines oder mehrere Amine sind verzugsweise in einem Anteil von 20 bis 100 Gew.-%, bevorzugt in einem Anteil von 30 bis 70 Gew.-% und noch bevorzugter in einem Anteil von 35 bis 70 Gew.-% bezogen auf das Gesamtgewicht der Aminkomponente in der Aminkomponente enthalten.

Die Mengenverhältnisse der Polyisocyanatkomponente (A) und der Aminkomponente (B) des Mehrkomponenten-Harzsystems werden bevorzugt so gewählt, dass das Verhältnis von mittlerer NCO-Funktionalität der Polyisocyanatverbindung zu der mittleren NH-Funktionalität des Amins zwischen 0,3 und 2,0 liegt, bevorzugt zwischen 0,5 und 1,8, weiter bevorzugt zwischen 0,5 und 1,5, noch weiter bevorzugt zwischen 0,7 und 1,5 und noch weiter bevorzugt 0,7 bis 1,3.

Zur Einstellung der Geschwindigkeit der Aushärtung kann eine Mischung unterschiedliche Isocyanate und/oder unterschiedliche Amine verwendet werden. In diesem Fall werden die Mengenverhältnisse so gewählt, dass das Verhältnis der gemittelten NCO-Funktionalität der Isocyanatmischung zu der gemittelten NH-Funktionalität der Aminmischung zwischen 0,3 und 2,0 liegt, bevorzugt zwischen 0,5 und 1,8, weiter bevorzugt zwischen 0,5 und 1,5, weiter bevorzugt zwischen 0,7 und 1,5 und noch weiter bevorzugt zwischen 0,7 und 1,3.

*Füllstoffe*

Sowohl die Isocyanatkomponente (A) als auch die Aminkomponente (B) können mindestens einen Füllstoff und mindestens ein Rheologieadditiv enthalten, wobei es erfindungswesentlich ist, dass zumindest eine der beiden Komponenten sowohl einen Füllstoff als auch ein Rheologieadditiv enthält. Es ist bevorzugt, dass sowohl die Isocyanatkomponente (A) als auch die Aminkomponente (B) jeweils mindestens einen Füllstoff als auch mindestens einen Rheologieadditiv enthalten.

Der Gesamtfüllgrad einer Mörtelmasse hergestellt durch Vermischen der Isocyanatkomponente (A) und der Aminkomponente (B) des Mehrkomponenten-Harzsystems liegt erfindungsgemäß in einem Bereich von 30 bis 80 Gew.-% bezogen auf das Gesamtgewicht der Mörtelmasse, bevorzugt in einem Bereich von 35 bis 65, noch bevorzugter in einem Bereich von 35 bis 60 Gew.-%. Der Gesamtfüllgrad der Mörtelmasse bezieht sich auf den gewichtsprozentualen Anteil an Füllstoff und Rheologieadditiv bezogen auf das Gesamtgewicht der Isocyanatkomponente (A) und der Aminkomponente (B). In einer bevorzugten Ausführungsform beträgt der Füllgrad der Isocyanatkomponente (A) 0 bis 80 Gew.-%, bevorzugt 10 bis 70 Gew.-%, weiter bevorzugt 35 bis 65 Gew.-% bezogen auf das Gesamtgewicht der Isocyanatkomponente (A). Der Füllgrad der Aminkomponente (B) beträgt vorzugsweise 0 bis 80 Gew.-%, bevorzugt 10 bis 70 Gew.-%, weiter bevorzugt 35 bis 65 Gew.-%, jeweils bezogen auf das Gesamtgewicht der Aminkomponente (B).

Als Füllstoffe dienen bevorzugt anorganische Füllstoffe, insbesondere Zemente wie Portlandzement oder Aluminatzement sowie andere hydraulisch abbindende anorganische Stoffe, Quarz, Glas, Korund, Porzellan, Steingut, Schwerspat, Leichtspat, Gips, Talkum und/oder Kreide sowie deren Mischungen. Die anorganischen Füllstoffe können in Form von Sanden, Mehlen oder Formkörpern, vorzugsweise in Form von Fasern oder Kugeln, zugesetzt werden. Durch eine geeignete Auswahl der Füllstoffe hinsichtlich Art und Korngrößenverteilung/(Faser)länge können applikationsrelevante Eigenschaften, wie rheologisches Verhalten, Auspresskräfte, innere Festigkeit, Zugfestigkeit, Auszugskräfte und Schlagzähigkeit gesteuert werden.

Als Füllstoffe kommen insbesondere nicht oberflächenbehandelte Quarzmehle, Feinquarzmehle und Feinstquarzmehle, wie beispielsweise Millisil W3, Millisil W6, Millisil W8 und Millisil W12, bevorzugt Millisil W12, in Frage. Ferner

können silanisierte Quarzmehle, Feinquarzmehle und Feinstquarzmehl eingesetzt werden. Diese sind beispielsweils käuflich unter der Produktserie Silbond der Firma Quarzwerke erhältlich. Hierbei sind die Produktserien Silbond EST (Epoxysilan-modifiziert) und Silbond AST (aminosilanbehandelt) besonders bevorzugt. Ferner können Aluminiumoxid basierte Füllstoffe wie beispielsweise Aluminiumoxidfeinstfüller vom Typ ASFP der Firma Denka, Japan, ($d_{50}$ = 0,3 µm) oder Qualitäten wie DAW oder DAM mit den Typenbezeichnungen 45 ($d_{50}$ < 0,44 µm), 07 ($d_{50}$ > 8,4µm), 05 ($d_{50}$ < 5,5 µm), 03 ($d_{50}$ < 4,1µm). Weiterhin können die oberflächenbehandelte Fein- und Feinstfüllstoffe vom Typ Aktisil AM (aminosilanbehandelt, $d_{50}$ = 2,2 µm) und Aktisil EM (epoxysilanbehandelt, d50=2,2 µm) von Hoffman Mineral verwendet werden. Die Füllstoffe können einzeln oder auch in beliebigen Mischung untereinander verwendet werden

Der Anteil der Füllstoffe in der Isocyanatkomponente (A) liegt vorzugsweise bei 10 bis 70 Gew.-%, bevorzugt bei 35 bis 65 Gew.-% bezogen auf das Gesamtgewicht der Isocyanatkomponente (A). Der Anteil der Füllstoffe in der Aminkomponente (B) liegt vorzugsweise bei 10 bis 70 Gew.-%, bevorzugt bei 35 bis 65 Gew.-% bezogen auf das Gesamtgewicht der Aminkomponente (B).

Die Einstellung der Fließeigenschaften erfolgt über den Zusatz von Rheologieadditiven, welche erfindungsgemäß in der Isocyanatkomponente (A) und/oder der Aminkomponente (B) verwendet werden Geeignete Rheologieadditive sind: Schichtsilikaten wie Laponite, Bentone oder Montmorillonit, Neuburger Kieselerde, pyrogenen Kieselsäuren, Polysaccharide; Polyacrylat-, Polyurethan- oder Polyharnstoffverdicker sowie Celluloseester. Zur Optimierung können weiterhin Netz- und Dispergiermittel, Oberflächenadditive, Entschäumer & Entlüfter, Wachsadditive, Haftvermittler, Viskositätsreduzierer oder Prozessadditive zugesetzt werden.

Der Anteil eines oder mehrerer Rheologieadditive in der Isocyanatkomponente (A) liegt vorzugsweise bei 0,1 bis 3 Gew.-%, bevorzugt bei 0,1 bis 1,5 Gew.-% bezogen auf das Gesamtgewicht der Isocyanatkomponente (A). Der Anteil eines oder mehrerer Rheologieadditive in der Aminkomponente (B) liegt vorzugsweise bei 0,1 bis 5 Gew.-%, bevorzugt bei 0,5 bis 3 Gew.-% bezogen auf das Gesamtgewicht der Aminkomponente (B).

In einer weiteren Ausführungsform kann die Isocyanatkomponente (A) und/oder die Aminkomponente (B) mindestens einen Haftvermittler enthalten.

Durch den Einsatz eines Haftvermittlers wird die Vernetzung der Bohrlochwand mit der Mörtelmasse verbessert, so dass sich die Haftung im ausgehärteten Zustand erhöht. Geeignete Haftvermittler sind aus der Gruppe der Silane ausgewählt, die mindestens eine Si-gebundene hydrolisierbare Gruppe aufweisen, wie beispielsweise 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyl-diethoxysilan, N-2-(Aminoethyl)-3-aminopropyl-triethoxysilan, 3-Aminopropyl-trimethoxysilan, 3-Aminopropyltriethoxysilan, N-Phenyl-3-aminoethyl-3-aminopropyl-trimethoxysilan, 3-Mercaptopropyltrimethoxysilan und 3-Mercaptopropylmethyldimethoxysilan. Als Haftvermittler sind insbesondere 3-Glycidoxypropyltrimethoxysilan, 3-Aminopropyl-trimethoxysilan (AMMO), 3-Aminopropyltriethoxysilan (AMEO), 2-Aminoethyl-3-aminopropyl-trimethoxysilan (DAMO) und Trimethoxysilylpropyldiethylentetramin (TRIAMO) bevorzugt. Weitere Silane sind beispielsweise in der EP3000792 A1 beschrieben.

Der Haftvermittler kann in einer Menge bis zu 10 Gew.-%, bevorzugt 0,1 bis 5 Gew.-%, weiter bevorzugt 1,0 bis 2,5 Gew.-% bezogen auf das Gesamtgewicht des Mehrkomponenten-Harzsystems in der Isocyanatkomponente (A) und/oder der Aminkomponente (B) enthalten sein.

Ein weiterer Gegenstand ist ferner eine Mörtelmasse, welche durch Vermischen der Isocyanatkomponente (A) und der Aminkomponente (B) des Mehrkomponenten-Harzsystems hergestellt wird.

Das Mehrkomponenten-Harzsystem liegt vorzugsweise in Patronen, Kartuschen oder Folienbeuteln vor, die dadurch gekennzeichnet sind, dass sie zwei oder mehrere voneinander getrennte Kammern umfassen, in welchen die Isocyanatkomponente (A) und die Aminkomponente (B) reaktionsinhibierend voneinander getrennt angeordnet sind.

Zur bestimmungsgemäßen Anwendung des Mehrkomponenten-Harzsystems werden die Isocyanatkomponente (A) und die Aminkomponente (B) aus den getrennten Kammern entleert und in einer geeigneten Vorrichtung, beispielsweise einem Statikmischer oder einem Dissolver, gemischt. Die Mischung aus Isocyanatkomponente (A) und Aminkomponente (B) (Mörtelmasse) wird danach mittels einer bekannten Injektionsvorrichtung in das zuvor gereinigte Bohrloch eingebracht. Anschließend wird das zu fixierende Bauteil in die Mörtelmasse eingesetzt und justiert. Die reaktiven Bestandteile Isocyanatkomponente (A) reagieren mit den Amingruppen der Aminkomponente (B) unter Polyaddition, sodass die Mörtelmasse unter Umgebungsbedingungen innerhalb einer gewünschten Zeit, vorzugsweise innerhalb weniger Minuten oder Stunden, aushärtet.

Die erfindungsgemäße Mörtelmasse bzw. das erfindungsgemäße Mehrkomponenten-Harzsystem wird bevorzugt für Bauzwecke eingesetzt. Der Begriff "für Bauzwecke" bedeutet das Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien,

Metallen (z.B. Stahl), Keramiken, Kunststoffen, Glas und Holz. Ganz besonders bevorzugt dienen die erfindungsgemäßen Mörtelmassen und die erfindungsgemäßen Mehrkomponenten-Harzsysteme zur chemischen Befestigung von Verankerungsmitteln.

Ein weiterer Gegenstand der vorliegenden Erfindung ist ein Verfahren zur chemischen Befestigung von Konstruktionselementen in Bohrlöchern, wobei zur chemischen Befestigung der Konstruktionselemente eine erfindungsgemäße Mörtelmasse oder ein erfindungsgemäßes Mehrkomponenten-Harzsystem wie zuvor beschrieben verwendet wird. Das erfindungsgemäße Verfahren eignet sich insbesondere zum Baukleben von Beton/Beton, Stahl/Beton oder Stahl/Stahl oder einer der genannten Materialien auf anderen mineralischen Materialien, die strukturelle Verstärkung von Bauteilen aus Beton, Mauerwerk und anderen mineralischen Materialien, die Armierungsanwendungen mit faserverstärkten Polymeren von Bauobjekten, die chemische Befestigung auf Oberflächen aus Beton, Stahl oder anderen mineralischen Materialien, insbesondere die chemische Befestigung von Konstruktionselementen und Verankerungsmitteln, wie Ankerstangen, Ankerbolzen, (Gewinde)stangen, (Gewinde)hülsen, Betoneisen, Schrauben und dergleichen, in Bohrlöchern in verschiedenen Untergründen, wie (Stahl)beton, Mauerwerk, anderen mineralischen Materialien, Metallen (z.B. Stahl), Keramiken, Kunststoffen, Glas und Holz. Ganz besonders bevorzugt dient das erfindungsgemäße Verfahren zur chemischen Befestigung von Verankerungsmitteln.

Ein weiterer Gegenstand der vorliegenden Erfindung ist ferner auch die Verwendung einer erfindungsgemäßen Mörtelmasse oder eines Mehrkomponenten-Harzsystem zur chemischen Befestigung von Konstruktionselementen in mineralischen Untergründen.

Ein weiterer Gegenstand ist auch die Verwendung einer erfindungsgemäßen Mörtelmasse oder eines erfindungsgemäßen Mehrkomponenten-Harzsystem zur Verbesserung der Temperaturrobustheit eines chemischen Dübels hergestellt aus einem erfindungsgemäßen Mehrkomponenten-Harzsystem. Dies umfasst insbesondere eine Erhöhung der Auszugsfestigkeiten bei hohen Temperaturen, wie beispielsweise bei 80 °C.

Die Erfindung wird im Folgenden anhand eines Ausführungsbeispiels weiter beschrieben, das jedoch nicht in einem einschränkenden Sinn verstanden werden soll.

## Ausführungsbeispiele

Verwendete Komponenten:

Als gegenüber Isocyanatgruppen reaktive Amin in der Aminkomponente wurden 4,4'-Methylen-bis[N-(1-methylpropyl)phenylamin] (von ABCR), Asparaginsäure, N,N'-(methylendi-4,1-cyclohexandiyl)bis-, 1,1',4,4'-tetraethylester (als Desmophen NH 1420 der Firma Covestro), eine Mischung aus (6-Methyl-2,4-bis(methylthio)phenylen-1,3-diamin und 2-Methyl-4,6-bis(methylthio)phenylen-1,3-diamin (als Ethacure 300 Curative der Firma Albermale), 4,4'-Methylenbis(2,6-diethylanilin) (von TCI) und Diethyltoluoldiamin (als Ethacure 100 der Firma Albermale) verwendet.

Als Isocyanate in der Isocyanatkomponente wurden Hexamethylen-1,6-diisocyanat Hompolymere (als Desmodur N 3600 und N 3900 der Firma Covestro), Hexamethylen-1,6-diisocyanat Biuret Oligomerisationsprodukt (als Desmodur N 3200 der Firma Covestro) und eine Mischung aus Hexamethylen-1,6-diisocyanat Hompolymer und Isophorondiisocyanat Hompolymer (als Desmodur XP 2838 der Firma Covestro) verwendet.

Als Haftvermittler wurden 3-Aminopropyltriethoxysilan (als Dynasylan AMEO der Firma Evonik) und 3-Glycidyloxypropyltrimethoxysilan (als Dynasylan GLYMO der Firma Evonik) verwendet.

Als Füllstüffe wurden Quarzmehle (Millisil™ W3 und W12 der Firma Quarzwerke Frechen), Quarzsand (F32 der Firma Quarzwerke Frechen) und als Verdicker Kieselsäure (Cab-O-Sil™ TS- 720 der Firma Cabot Rheinfelden) verwendet.

Vergleichsbeispiele

Als Vergleichsbeispiele dienen zum einen zwei handelsübliche Mörtelmassen: RE500V3 (Fa. Hilti, Vergleichsbeispiel 1, Epoxidharzmörtel) und HY200A (Fa. Hilti, Vergleichsbeispiel 2). Als Vergleichsbeispiel 3 dient die in der nachfolgenden Tabelle angeführte Zusammensetzung, welche an die EP 3 447 078 A1 anlehnt.

Tabelle 1: Zusammensetzung Vergleichsbeispiel 3 in Gew.-% in Anlehnung an EP 3447078 A1

| **Bestandteile** | **Vergleichsbeispiel 3** |
|---|---|
| **Isocyanatkomponente** | |
| Hexamethylen-1,6-diisocyanat Hompolymer (N3900) | 24,4 |
| Quarzmehl (W12) | 14,4 |
| Kieselsäure | 0,6 |

(fortgesetzt)

| Aminkomponente | |
|---|---|
| Asparaginsäure, N,N'-(methylendi-4,1-cyclohexandiyl)bis-, 1,1',4,4'-tetraethylester | 37,6 |
| Quarzmehl (W12) | 22,1 |
| Kieselsäure | 0,9 |
| | |
| Isocyanat:Amin Verhältnis | 1:1 |
| Füllgrad in % | 38 |

Erfindungsgemäße Beispiele

Die erfindungsgemäßen Zusammensetzungen der Isocyanatkomponente und der Aminkomponente ist in den nachfolgenden Tabellen 2 und 3 angegeben.

**Tabelle 2**: Zusammensetzungen der Isocyanatkomponente und der Aminkomponente [Gew.-%] für die erfindungsgemäßen Beispiele 1 bis 7; Verwendung unterschiedlicher Amine.

| | | 1 | 2 | 3 | 4 | 5 | 6 | 7 |
|---|---|---|---|---|---|---|---|---|
| Isocyanat-komponente | Hexamethylen-1,6-diisocyanat Homopolymer (N3900) | 38,9 | 39,6 | 36,4 | 37,7 | 37,9 | 33,4 | 39,0 |
| | Quarzmehl (W12) | 22,9 | 24,2 | 21,4 | 22,2 | 22,3 | 19,6 | 23,0 |
| | Kieselsäure | 0,9 | 1,0 | 0,9 | 0,9 | 0,9 | 0,9 | 0,9 |
| | | | | | | | | |
| Aminkomponente | 4,4'-Methylen-bis[N-(1-methylpropyl)phenylamin] | - | - | 12,8 | 6,1 | - | 22,9 | - |
| | (6-Methyl-2,4-bis(methylthio)phenylen-1,3-diamin / 2-Methyl-4,6-bis(methylthio)phenylen-1,3-diamin (DMTDA) | 23,1 | 23,4 | 12,8 | 18,2 | 19,2 | - | 21,9 |
| | 4,4'-Methylenbis(2,6-diethylanilin) | - | - | - | - | 4,8 | 5,7 | - |
| | Diethyltoluoldiamin (DETDA) | - | - | - | - | - | - | 1,1 |
| | Quarzmehl (W12) | 13,5 | 11,2 | 15,1 | 14,3 | 14,2 | 16,9 | 13,5 |
| | Kieselsäure | 0,7 | 0,5 | 0,6 | 0,6 | 0,6 | 0,6 | 0,6 |
| | | | | | | | | |
| | Isocyanat:Amin Verhältnis | 1:1 | 1:1 | 1:1 | 1:1 | 1:1 | 1:1 | 1:1 |
| | Füllgrad in % | 38 | 37 | 38 | 38 | 38 | 38 | 38 |

**Tabelle 3**: Zusammensetzungen der Isocyanatkomponente und der Aminkomponente [Gew.-%] für die erfindungsgemäßen Beispiele 8 bis 16; Beispiele 8 bis 10: Variation der Isocyanats; Beispiele 11 bis 14: Variation der Füllstoffe und des Füllgrades; Beispiele 15 und 16: Silanzusatz.

| | | **8** | **9** | **10** | **11** | **12** | **13** | **14** | **15** | **16** |
|---|---|---|---|---|---|---|---|---|---|---|
| Isocyanatkomponente | Hexamethylen-1,6-diisocyanat Hompolymer / Isophorondiisocyanat Hompolymer (XP2838) | 40,3 | - | - | - | - | - | - | - | - |
| | Hexamethylen-1,6-diisocyanat Biuret Oligomerisationsprodukt (N3200) | - | 40,1 | - | - | - | - | - | - | - |
| | Hexamethylen-1,6-diisocyanat Homopolymer (N3600) | - | - | 39,2 | - | - | - | - | - | - |
| | Hexamethylen-1,6-diisocyanat Homopolymer (N3900) | - | - | - | 31,4 | 25,1 | 38,9 | 38,9 | 39,3 | 38,3 |
| | Quarzsand (F32) | - | - | - | - | - | - | 22,9 | - | - |
| | Quarzmehl (W3) | - | - | - | - | - | 22,9 | - | - | - |
| | Quarzmehl (W12) | 23,7 | 23,6 | 23,6 | 30,5 | 36,7 | - | - | 22,4 | 21,4 |
| | Kieselsäure | 1,0 | 1,0 | 1,0 | 0,9 | 0,9 | 0,9 | 0,9 | 0,9 | 0,9 |
| | | | | | | | | | | |
| Aminkomponente | (6-Methyl-2,4-bis(methylthio)phenylen-1,3-diamin / 2-Methyl-4,6-bis(methylthio)phenylen-1,3-diamin (DMTDA) | 21,7 | 22,0 | 22,8 | 18,6 | 14,9 | 23,1 | 23,1 | 22,8 | 23,7 |
| | 3-Amino-propyltrimethoxy-silan | - | - | - | - | - | - | - | 1,1 | - |
| | Quarzsand (F32) | - | - | - | - | - | - | 13,6 | - | - |
| | Quarzmehl (W3) | - | - | - | - | - | 13,6 | - | - | - |
| | Quarzmehl (W12) | 12,8 | 12,9 | 12,9 | 18,0 | 21,8 | - | - | 13,0 | 13,2 |
| | Kieselsäure | 0,5 | 0,5 | 0,5 | 0,6 | 0,6 | 0,6 | 0,6 | 0,6 | 0,6 |
| | | | | | | | | | | |
| | Isocyanat:Amin Verhältnis | 1:1 | 1:1 | 1:1 | 1:1 | 1:1 | 1:1 | 1:1 | 1:1 | 1:1 |
| | Füllgrad in % | 38 | 38 | 38 | 50 | 60 | 38 | 38 | 37 | 36 |

**Mörtelmassen und Auszugsversuche**

Zur Herstellung der Mörtelmassen wurden zunächst die Isocyanatkomponente und die Aminkomponente

jeweils einzeln hergestellt. Dazu wurden jeweils die in den Tabellen 1 bis 3 angegebenen Bestandteile zusammengegeben und miteinander vermischt. Die so hergestellte flüssige Isocyanat- bzw. Aminkomponente wurden jeweils in einem Speedmixer (DAC-600 der Fa. Hauschild) für 30 s bei 1500 U/min gemischt. Anschließend wurden die Isocyanatkomponente und die Aminkomponente miteinander vereinigt und in einem Speedmixer für 30 s bei 1500 U/min gemischt. Die so erhaltene Mörtelmasse wurde in eine Hartkartusche gefüllt und mittels eines Auspressgerätes in ein Bohrloch injiziert.

Die Auszugsfestigkeit der durch Mischen der Isocyanatkomponente und der Aminkomponente gemäß den oben angegebenen Beispielen erhaltenen Mörtelmassen wurden unter Verwendung einer hochfesten Ankergewindestange M12 bestimmt, die in ein hammergebohrtes Bohrloch mit einem Durchmesser von 14 mm und einer Bohrlochtiefe von 72 mm mit der jeweiligen Mörtelmasse in C20/25 Beton eingedübelt wurde. Die Bohrlöcher wurden mit Druckluft (2 x 6 bar), einer Drahtbürste (2 x) und anschließend wieder Druckluft (2 x 6 bar) gereinigt.

Die Bohrlöcher wurden vom Bohrgrund her mit der jeweils zu prüfenden Mörtelmasse zu zwei Dritteln befüllt. Die Gewindestange wurde von Hand eingedrückt. Nach der Aushärtung wurde der aus dem Bohrloch überstehende Mörtelring abgeschlagen.

Zur Bestimmung der Referenzverbundspannung wurde nach einer Aushärtezeit von 24 h bei einer Temperatur von 23°C die Versagenslast durch zentrisches Ausziehen der Ankergewindestange mit enger Abstützung ermittelt.

Zur Bestimmung der Verbundspannung bei 80 °C wurden nach einer Aushärtezeit von 24 h bei einer Temperatur von 23°C, die Betonblöcke auf 80 °C erhitzt und für 24 h bei der Temperatur gehalten. Sofort nach Entnahme der Betonplatten aus dem Ofen wurde die Versagenslast bei 80 °C durch zentrisches Ausziehen der Ankergewindestange mit enger Abstützung ermittelt.

Die mit den Mörtelmassen erhaltenen Verbundspannung sind den nachfolgenden Tabellen 4 bis 6 zu entnehmen.

**Tabelle 4:** Ergebnisse der Bestimmung der Referenzverbundspannung bei 23 °C nach 24 Stunden Aushärtezeit und der Verbundspannung bei 80 °C für die Vergleichsbeispiele 1 bis 3.

| | Vergleichsbeispiel 1 | Vergleichsbeispiel 2 | Vergleichsbeispiel 3 |
|---|---|---|---|
| Auszugsversuche | Verbundspannung [N/mm$^2$] | | |
| **Referenz** | 39 | 32 | 26,0 |
| **80 °C** | 16 | 25 | 1,8 |
| **Verhältnis** | 0,41 | 0,78 | 0,07 |

**Tabelle 5:** Ergebnisse der Bestimmung der Referenzverbundspannung bei 23 °C nach 24 Stunden Aushärtezeit und der Verbundspannung bei 80 °C für die erfindungsgemäßen Beispiele 1 bis 7.

| | 1 | 2 | 3 | 4 | 5 | 6 | 7 |
|---|---|---|---|---|---|---|---|
| Auszugsversuche | Verbundspannung [N/mm$^2$] | | | | | | |
| **Referenz** | 23,5 | 24,4 | 29,9 | 26,1 | 24,8 | 27,2 | 25,0 |
| **80 °C** | 22,8 | 23,0 | 15,5 | 19,0 | 25,5 | 17,5 | 23,5 |
| **Verhältnis** | 0,97 | 0,94 | 0,52 | 0,73 | 1,03 | 0,64 | 0,94 |
| * Nicht bestimmbar | | | | | | | |

**Tabelle 6:** Ergebnisse der Bestimmung der Referenzverbundspannung bei 23 °C nach 24 Stunden Aushärtezeit und der Verbundspannung bei 80 °C für die erfindungsgemäßen Beispiele 8 bis 16.

| | 8 | 9 | 10 | 11 | 12 | 13 | 14 | 15 | 16 |
|---|---|---|---|---|---|---|---|---|---|
| Auszugsversuche | Verbundspannung [N/mm$^2$] | | | | | | | | |
| **Referenz** | 18,2 | 25,6 | 22,7 | 25,5 | 26,6 | 22,6 | 20,4 | 23,5 | 26,0 |
| **80 °C** | 23,6 | 20,1 | 22,9 | 23,3 | 23,6 | 23,5 | 23,7 | 20,7 | 24,7 |
| **Verhältnis** | 1,30 | 0,78 | 1,01 | 0,92 | 0,89 | 1,04 | 1,16 | 0,89 | 0,95 |

## Patentansprüche

1. Mehrkomponenten-Harzsystem enthaltend mindestens eine Isocyanatkomponente (A) und mindestens eine Amin-

komponente (B),

die Isocyanatkomponente (A) umfasst

- mindestens ein aliphatisches und/oder aromatisches Polyisocyanat mit einer mittleren NCO-Funktionalität von 2 oder größer,

die Aminkomponente (B) umfasst

- mindestens ein gegenüber Isocyanatgruppen reaktives Amin mit einer mittleren NH-Funktionalität von 2 oder größer,

**dadurch gekennzeichnet, dass** das Mehrkomponenten-Harzsystem frei von Polyasparaginsäureestern ist, die Isocyanatkomponente (A) und/oder die Aminkomponente (B) mindestens einen Füllstoff sowie mindestens ein Rheologieadditiv umfasst und
dass der Gesamtfüllgrad einer Mörtelmasse hergestellt durch Vermischen der Isocyanatkomponente (A) und der Aminkomponente (B) in einem Bereich von 30 bis 80 % bezogen auf das Gesamtgewicht des Mehrkomponenten-Harzsystems liegt.

2. Mehrkomponenten-Harzsystem gemäß Anspruch 1, **dadurch gekennzeichnet, dass** sowohl die Isocyanatkomponente (A) und die Aminkomponente (B) mindestens einen Füllstoff und mindestens ein Rheologieadditiv umfassen.

3. Mehrkomponenten-Harzsystem gemäß Anspruch 2, **dadurch gekennzeichnet, dass** der Füllgrad der Isocyanatkomponente (A) und der Füllgrad der Aminkomponente (B) 10 bis 70 Gew.-% beträgt jeweils bezogen auf das Gesamtgewicht der Isocyanatkomponente (A) bzw. der Aminkomponente (B).

4. Mehrkomponenten-Harzsystem gemäß einem der vorhergehenden Ansprüche, **dadurch gekennzeichnet, dass** die Isocyanatkomponente (A) und die Aminkomponente (B) in einem Mengenverhältnis vorliegen, bei dem die mittlere NCO-Funktionalität zu der mittleren NH-Funktionalität zwischen 0,3 und 2,0 liegt.

5. Mehrkomponenten-Harzsystem gemäß einem der vorhergehenden Ansprüche, **dadurch gekennzeichnet, dass** die Isocyanatkomponente (A) mindestens ein aromatisches Polyisocyanat ausgewählt aus der Gruppe bestehend aus 1,4-Phenylendiisocyanat, 2,4- und/oder 2,6-Toluylendiisocyanat, Xylylendiisocyanat, hydriertem Xylylendiisocyanat, Tetramethylxylylendiisocyanat, 1,5-Naphthylendiisocyanat, Diphenylenmethan-2,4'- und/oder -4,4'-diisocyanat, Triphenylmethan-4,4',4"-triisocyanat, Bis- und Tris-(isocyanatoalkyl)-benzol, -toluol und -xylol sowie Gemische davon umfasst.

6. Mehrkomponenten-Harzsystem gemäß einem Ansprüche 1 bis 4, **dadurch gekennzeichnet, dass** die Isocyanatkomponente (A) mindestens ein aliphatisches Polyisocyanat ausgewählt aus der Gruppe bestehend aus Hexamethylendiisocyanat (HDI), Trimethyl-HDI (TMDI), Pentandiisocyanat (PDI) 2-Methylpentan-1,5-diisocyanat (MPDI), Isophorondiisocyanat (IPDI), 1,3- sowie 1,4-Bis(isocyanatomethyl)cyclohexan ($H_6XDI$), Bis(isocyanatomethyl)norbornan (NBDI), 3(4)-Isocyanatomethyl-1-methyl-cyclohexylisocyanat (IMCI) und 4,4'-Bis(iso- cyanatocyclohexyl)methan ($H_{12}MDI$) und Gemische davon umfasst.

7. Mehrkomponenten-Harzsystem gemäß einem der vorhergehenden Ansprüche, **dadurch gekennzeichnet, dass** der Gesamtfüllgrad in einem Bereich von 35 bis 65 Gew.-% bezogen auf das Gesamtgewicht des Mehrkomponenten-Harzsystems liegt.

8. Mehrkomponenten-Harzsystem gemäß einem der vorhergehenden Ansprüche, **dadurch gekennzeichnet, dass** die Isocyanatkomponente (A) und/oder die Aminkomponente (B) mindestens einen Haftvermittler enthalten.

9. Mehrkomponenten-Harzsystem gemäß einem der vorhergehenden Ansprüche, **dadurch gekennzeichnet, dass** das gegenüber Isocyanatgruppen reaktive Amin ausgewählt ist aus der Gruppe bestehend aus 4,4'-Methylen-bis [N-(1-methylpropyl)phenylamin], ein Isomerengemisch aus 6-Methyl-2,4-bis(methylthio)phenylen-1,3-diamin und 2-Methyl-4,6-bis(methylthio)phenylen-1,3-diamin (Ethacure 300), 4,4'-Methylenbis(2,6-diethylanilin), 4,4'-Methylenebis(N-sec-butylcyclohexanamin) (Clearlink 1000), 3,3'-Diaminodiphenylsulfon (Dapson), N,N'-Di-sec-butyl-p-phenylenediamin und 2,4,6-Trimethyl-m-phenylenediamin sowie Mischungen davon.

**10.** Mehrkomponenten-Harzsystem gemäß einem der vorhergehenden Ansprüche, **dadurch gekennzeichnet, dass** das Mehrkomponenten-Harzsystem ein Zweikomponenten-Harzsystem ist.

**11.** Mörtelmasse hergestellt durch das Vermischen der Isocyanatkomponente (A) und der Aminkomponente (B) des Mehrkomponenten-Harzsystems gemäß einem der vorhergehenden Ansprüche.

**12.** Verfahren zur chemischen Befestigung von Konstruktionselementen in Bohrlöchern, wobei zur chemischen Befestigung eine Mörtelmasse nach Anspruch 11 oder ein Mehrkomponenten-Harzsystem gemäß einem der Ansprüche 1 bis 10 verwendet wird.

**13.** Verwendung einer Mörtelmasse gemäß Anspruch 11 oder eines Mehrkomponenten-Harzsystem gemäß einem der Ansprüche 1 bis 10 zur Verbesserung der Temperaturrobustheit eines chemischen Dübels.

**14.** Verwendung gemäß Anspruch 13 zur Verbesserung der Auszugsfestigkeit bei hohen Temperaturen, insbesondere bei 80 °C.

## Claims

**1.** Multi-component resin system containing at least one isocyanate component (A) and at least one amine component (B),

the isocyanate component (A) comprising

- at least one aliphatic and/or aromatic polyisocyanate which has an average NCO functionality of 2 or more,

the amine component (B) comprising

- at least one amine which is reactive to isocyanate groups and has an average NH functionality of 2 or more,

**characterized in that** the multi-component resin system is free of polyaspartic acid esters, the isocyanate component (A) and/or the amine component (B) comprises at least one filler and at least one rheology additive, and
**in that** the total filling level of a mortar composition produced by mixing the isocyanate component (A) and the amine component (B) is in a range from 30 to 80%, based on the total weight of the multi-component resin system.

**2.** Multi-component resin system according to claim 1, **characterized in that** both the isocyanate component (A) and the amine component (B) comprise at least one filler and at least one rheology additive.

**3.** Multi-component resin system according to claim 2, **characterized in that** the filling level of the isocyanate component (A) and the filling level of the amine component (B) is from 10 to 70 wt.%, based in each case on the total weight of the isocyanate component (A) and the amine component (B), respectively.

**4.** Multi-component resin system according to any of the preceding claims, **characterized in that** the isocyanate component (A) and the amine component (B) are present in a quantity ratio in which the average NCO functionality to the average NH functionality is between 0.3 and 2.0.

**5.** Multi-component resin system according to any of the preceding claims, **characterized in that** the isocyanate component (A) comprises at least one aromatic polyisocyanate selected from the group consisting of 1,4-phenylene diisocyanate, 2,4- and/or 2,6-toluylene diisocyanate, xylylene diisocyanate, hydrogenated xylylene diisocyanate, tetramethylxylylene diisocyanate, 1,5-naphthylene diisocyanate, diphenylene methane-2,4'- and/or -4,4'-diisocyanate, triphenylmethane-4,4',4''-triisocyanate, bis- and tris-(isocyanatoalkyl)-benzene, -toluene and -xylene, and mixtures thereof.

**6.** Multi-component resin system according to any of claims 1 to 4, **characterized in that** the isocyanate component (A) comprises at least one aliphatic polyisocyanate selected from the group consisting of hexamethylene diisocyanate (HDI), trimethyl HDI (TMDI), pentane diisocyanate (PDI) 2-methylpentane-1,5-diisocyanate (MPDI), isophorone diisocyanate (IPDI), 1,3- and 1,4-bis(isocyanatomethyl)cyclohexane ($H_6XDI$), bis(isocyanatomethyl)norbornane

(NBDI), 3(4)-isocyanatomethyl-1-methylcyclohexyl isocyanate (IMCI) and 4,4'-bis(isocyanatocyclohexyl)methane ($H_{12}MDI$), and mixtures thereof.

7. Multi-component resin system according to any of the preceding claims, **characterized in that** the total filling level is in a range from 35 to 65 wt.%, based on the total weight of the multi-component resin system.

8. Multi-component resin system according to any of the preceding claims, **characterized in that** the isocyanate component (A) and/or the amine component (B) contain at least one adhesion promoter.

9. Multi-component resin system according to any of the preceding claims, **characterized in that** the amine which is reactive to isocyanate groups is selected from the group consisting of 4,4'-methylene-bis[N-(1-methylpropyl)phenylamine], an isomer mixture of 6-methyl-2,4-bis(methylthio)phenylene-1,3-diamine and 2-methyl-4,6-bis(methylthio)phenylene-1,3-diamine (Ethacure 300), 4,4'-methylenebis(2,6-diethylaniline), 4,4'-methylenebis(N-sec-butylcyclohexanamine) (Clearlink 1000), 3,3'-diaminodiphenylsulfone (dapsone), N,N'-di-sec-butyl-p-phenylenediamine and 2,4,6-trimethyl-m-phenylenediamine, and mixtures thereof.

10. Multi-component resin system according to any of the preceding claims, **characterized in that** the multi-component resin system is a two-component resin system.

11. Mortar composition produced by mixing the isocyanate component (A) and the amine component (B) of the multi-component resin system according to any of the preceding claims.

12. Method for the chemical fastening of construction elements in boreholes, wherein a mortar composition according to claim 11 or a multi-component resin system according to any of claims 1 to 10 is used for the chemical fastening.

13. Use of a mortar composition according to claim 11 or a multi-component resin system according to any of claims 1 to 10 for improving the temperature resistance of a chemical anchor.

14. Use according to claim 13 for improving the pull-out strength at high temperatures, in particular at 80°C.

**Revendications**

1. Système de résine à plusieurs composants contenant au moins un composant isocyanate (A) et au moins un composant amine (B),

le composant isocyanate (A) comprend

- au moins un polyisocyanate aliphatique et/ou aromatique comportant une fonctionnalité NCO moyenne de 2 ou plus,

le composant amine (B) comprend

- au moins une amine réactive vis-à-vis des groupes isocyanate comportant une fonctionnalité NH moyenne de 2 ou plus,

**caractérisé en ce que** le système de résine à plusieurs composants est exempt d'esters d'acide polyaspartique, le composant isocyanate (A) et/ou le composant amine (B) comprennent au moins une matière de charge ainsi qu'au moins un additif rhéologique, et
**que** le niveau de remplissage total d'une masse de mortier préparée en mélangeant le composant isocyanate (A) et le composant amine (B) se situe dans une plage allant de 30 à 80 % par rapport au poids total du système de résine à plusieurs composants.

2. Système de résine à plusieurs composants selon la revendication 1, **caractérisé en ce que** le composant isocyanate (A) et le composant amine (B) comprennent tous deux au moins une matière de charge et au moins un additif rhéologique.

3. Système de résine à plusieurs composants selon la revendication 2, **caractérisé en ce que** le niveau de remplissage

du composant isocyanate (A) et le niveau de remplissage du composant amine (B) vont de 10 à 70 % en poids, respectivement par rapport au poids total du composant isocyanate (A) ou du composant amine (B).

4. Système de résine à plusieurs composants selon l'une des revendications précédentes, **caractérisé en ce que** le composant isocyanate (A) et le composant amine (B) sont présents dans un rapport quantitatif dans lequel la fonctionnalité NCO moyenne par rapport à la fonctionnalité NH moyenne est comprise entre 0,3 et 2,0.

5. Système de résine à plusieurs composants selon l'une des revendications précédentes, **caractérisé en ce que** le composant isocyanate (A) comprend au moins un polyisocyanate aromatique choisi dans le groupe constitué de 1,4-diisocyanate de phénylène, 2,4- et/ou 2,6-diisocyanate de toluylène, diisocyanate de xylylène, diisocyanate de xylylène hydrogéné, diisocyanate de tétraméthylxylylène, 1,5-diisocyanate de naphtylène, 2,4'- et/ou 4,4'-diisocyanate de diphénylèneméthane, 4,4',4"-triisocyanate de triphénylméthane, bis- et tris-(isocyanatoalkyl)-benzène, -toluène et -xylène ainsi que des mélanges de ceux-ci.

6. Système de résine à plusieurs composants selon l'une des revendications 1 à 4, **caractérisé en ce que** le composant isocyanate (A) comprend au moins un polyisocyanate aliphatique choisi dans le groupe constitué de diisocyanate d'hexaméthylène (HDI), triméthyl-HDI (TMDI), diisocyanate de pentane (PDI), 1,5-diisocyanate de 2-méthylpentane (MPDI), diisocyanate d'isophorone (IPDI), 1,3- et 1,4-bis(isocyanatométhyl)cyclohexane ($H_6XDI$), bis(isocyanatométhyl)norbornane (NBDI), 3(4)-isocyanatométhyl-1-méthylcyclohexylisocyanate (IMCI) et 4,4'-bis(iso-cyanatocyclohexyl)méthane ($H_{12}MDI$) et mélanges de ceux-ci.

7. Système de résine à plusieurs composants selon l'une des revendications précédentes, **caractérisé en ce que** le niveau de remplissage total se situe dans une plage allant de 35 à 65 % en poids par rapport au poids total du système de résine à plusieurs composants.

8. Système de résine à plusieurs composants selon l'une des revendications précédentes, **caractérisé en ce que** le composant isocyanate (A) et/ou le composant amine (B) contiennent au moins un agent d'adhérence.

9. Système de résine à plusieurs composants selon l'une des revendications précédentes, **caractérisé en ce que** l'amine réactive vis-à-vis des groupes isocyanate est choisie dans le groupe constitué de 4,4'-méthylène-bis[N-(1-méthylpropyl)phénylamine], un mélange d'isomères de 6-méthyl-2,4-bis(méthylthio)phénylène-1,3-diamine et 2-méthyl-4,6-bis(méthylthio)phénylène-1,3-diamine (Ethacure 300), 4,4'-méthylènebis(2,6-diéthylaniline), 4,4'-méthylènebis(N-sec-butylcyclohexanamine) (Clearlink 1000), 3,3'-diaminodiphénylsulfone (Dapson), N,N'-di-sec-butyl-p-phénylènediamine et 2,4,6-triméthyl-m-phénylènediamine, ainsi que des mélanges de ceux-ci.

10. Système de résine à plusieurs composants selon l'une des revendications précédentes, **caractérisé en ce que** le système de résine à plusieurs composants est un système de résine à deux composants.

11. Masse de mortier préparée en mélangeant le composant isocyanate (A) et le composant amine (B) du système de résine à plusieurs composants selon l'une des revendications précédentes.

12. Procédé permettant la fixation chimique d'éléments de construction dans des trous de forage, dans lequel une masse de mortier selon la revendication 11 ou un système de résine à plusieurs composants selon l'une des revendications 1 à 10 est utilisé pour la fixation chimique.

13. Utilisation d'une masse de mortier selon la revendication 11 ou d'un système de résine à plusieurs composants selon l'une des revendications 1 à 10 pour l'amélioration de la robustesse à la température d'une cheville chimique.

14. Utilisation selon la revendication 13 pour l'amélioration de la résistance à l'arrachement à haute température, en particulier à 80 °C.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3447078 A1
- DE 102008018861 A1
- EP 3000792 A1


### In der Beschreibung aufgeführte Nicht-Patentliteratur


- IUPAC Compendium of Chemical Terminology. Blackwell Scientific Publications, 1997